(19) Europäisches Patentamt / European Patent Office / Office européen des brevets

(11) **EP 1 746 559 A1**

(12) **EUROPEAN PATENT APPLICATION**

(43) Date of publication:
**24.01.2007 Bulletin 2007/04**

(51) Int Cl.:
**G09B 23/28** (2006.01)

(21) Application number: **05291564.2**

(22) Date of filing: **20.07.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (72) Inventors:<br>• **The inventor has agreed to waive his entitlement to designation.**<br><br>(74) Representative: **Benech, Frédéric**<br>**146-150, Avenue des Champs-Elysées**<br>**75008 Paris (FR)** |
| (71) Applicant: **Richstone Consulting LLC**<br>**Tappan, New York 10983 (US)** | |

(54) **A method for simulating a manual interventional operation by a user in a medical procedure**

(57)  The present invention deals with a method of simulating a manual interventional operation by a user on the internal system of a body with at least two real instruments (3, 4, 5), with a device (6) comprising a longitudinal track (8), a plurality of moveable carriages along said track, each carriage having clamping means, means for rotating and moving longitudinally said real instrument, visuals means, processing means for simulating a medical procedure and providing visual elements on said visual means and feed back means (18) for receiving and transmitting to the user hand (19) a feed back force from said real instrument with respect to simulation characteristic.

The method comprises the steps of recognizing a real instrument (23) to be fit within said clamping means, said real instrument within said clamping means to be moved longitudinally and rotated by the user and simulating said interventional operation after modelling (22) said internal system with a mesh geometry.

FIG. 2

**Description**

The present invention is related to a method for simulating a manual interventional operation by a user in a medical procedure.

It is more particularly, but not exclusively related to endoscopic procedures such as bronchoscopy, laryngoscopy, gastroscopy, colonoscopy, arthoroscopy, laparoscopy or ureteroscopy.

In the field of medical procedure simulation there exists a need for improved methods which will authorize better realistical portray of an actual surgical procedure.

This is due to the fact that performance of endoscopic procedure requires skill to avoid complications that may cause important injury to a patient.

In case of angioplasty-balloon procedure for instance, the surgeon should direct a guide wire, a catheter and a sheath through arteries to a blockage point and inflate a balloon to withdraw the blockage.

This has to be done while avoiding numerous complications, such as hurting an artery and creating hemoragy.

Therefore these practionners imperatively need to develop expertise in order to ensure successful operations.

Training on live patients is efficient but need a skilled physician to supervise and avoid serious injuries to the patient.

It also needs the use of hospital facilities and equipment, and of course live patients to allow sufficient experience to perform these types of procedure.

That is why simulation has occurred in this field with expertise originally coming from simulating procedures used in other fields such as aeronautics or vehicle driving.

The prior art which has attempted to overcome the above described disadvantages of live patients to train physicians is basically disclosing (see for instance US 4,907,973) expert simulator system for modeling realistic internal environment having a mock tool such as an endoscope inserted and manipulated within a model.

A computer is used for representing the views observed from the measured endoscope position during a real operation.

Such systems present disadvantages.

The use of physical models restricts training to particular bodily regions, obliges simplification as a model cannot contain the same complex anatomy than a real body, and also is not providing feedback on the applied force.

In order to be more realistic it has then been developed (see for instance US 5,821,920) a medical procedure simulation system that utilizes virtual reality technology. Such process includes a display device and programmable tactile/force reflecting mechanisms that provide force feedback to generate the feeling of medical instrument and the interaction of the instruments with a simulated anatomy.

But such systems of the prior art are also suffering of some disadvantages concerning both the way the feedback is provided to the physician and the difficulty of realistically simulating the body of the patient and the instrument to be driven within said patient during a medical procedure with all the different positions and orientations which can be provided in real life, as well as with several instruments provided simultaneously.

Accordingly, it is an object of the present invention to allow enhanced training of medical procedure to surgeons by providing better accuracy and more realistic simulation of a plurality of situations involving a plurality of tools.

It is therefore a main object of the present invention to provide improved methods for simulating a manual interventional operation by a user which are better than those presently known for fulfilling the requirements of practice, particularly in that they make it possible to simulate real operations more accurately than in the past.

Another object of the present invention is related to the particular efficiency of new algorithms which are implemented for obtaining such realistic results.

To this end, the present invention provides a method for simulating a manual interventional operation by a user on an internal system of a body with at least two real instruments, with a device comprising a longitudinal track, a plurality of moveable carriages along said track, each carriage having clamping means for securing one of said real instruments to said corresponding carriage, means for rotating and moving longitudinally said real instrument, visuals means, processing means for simulating a medical procedure and providing visual elements on said visual means and feed back means for receiving and transmitting to the user hand a feed back force from said real instrument with respect to simulation characteristic, characterised in that said method comprises the steps of recognizing a real instrument to be fit within said clamping means, said real instrument within said clamping means to be moved longitudinally and rotated by the user and simulating said interventional operation after modelling said internal system with a mesh geometry.

By internal system one should understand any system to be cured or treated by endoscopic procedures, such as the cardiovascular system, the gaster system, the intestines system etc.

In advantageous embodiments, recourse is further had to one and/or other of the following arrangements:

- the internal system is the cardiovascular system;
- the method further comprises the step of simulating blood pressure;

- it further comprises the step of simulating collision with heart attacks;
- it further comprises the step of providing expansion produced during the cure of stenosis;
- spasms are simulated;
- it further comprises the step of modelling the contrast fluid diffusion in relation with the veins elasticity, and the possible presence of stenosis.

Advantageously the spasm is obtained by changing the cardiac heartbeat animation frequency, the ECG waveform and the diffusion of the contrast liquid in the vessel.

The invention will be better understood from reading the following description of particular embodiments, given by way of non limiting example.

The description refers to the accompanying drawings, in which :

Figure 1 is a simplified diagram providing a perspective of an overview of a system for implementing methods according to the invention.

Figure 2 is a general flow chart of the method according to the embodiment of the invention more particularly described here.

Figure 3 is a representation of a part of the heart system with a mesh geometry according to the invention.

Figure 4 is a temperature diagram showing the appropriate thermal expansion of an example of structural material on which a gage is to be used for measuring feedback strains.

Figure 5 shows an example of the simulation of the contrast liquid transport inside a simplified model of the vascular tree.

Figure 6 shows an organigram allowing double feedback.

Figure 7 is an organigram showing the steps to follow in order to simulate the contrast fluid in relation with the veins elasticity.

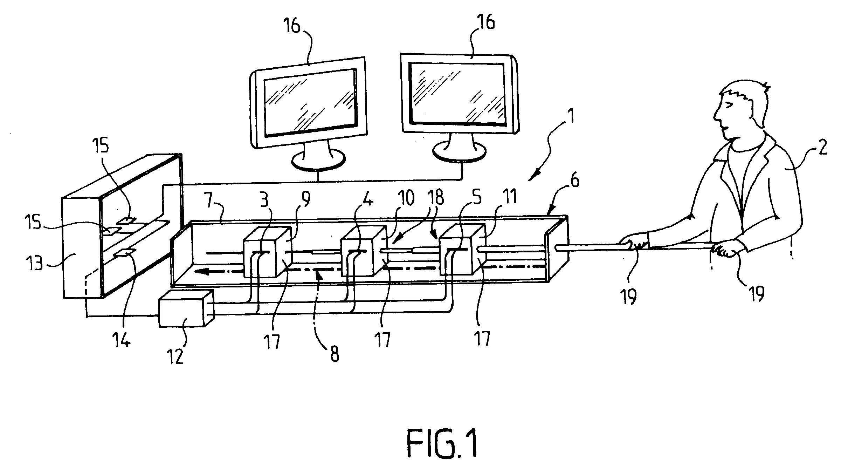

Figure 1 shows a system 1 for simulating a manual interventional operation by a user 2 on a simulated body which could be materialized by a manikin (not represented), with three real instruments 3, 4, 5 such as for instance a guide wire, a catheter and a sheath, comprising a device 6 having a protecting casing 7, a longitudinal track 8, three movable identical carriages 9, 10, 11 along said track, each arranged for securing a corresponding instrument with clamping means of a type known per se, and having means for rotating and moving longitudinally said instrument.

Each carriage is respectively connected to an interface box 12 connected to a computer 13 having a processing unit 14, storing memories 15 and a set of two visual screens 16.

Each carriage comprises detecting means 17, for instance optical captors, for recognizing the presence of real instrument 3, 4, 5 to be fitted in, such as an endoscope, a catheter, etc.

It also comprises feedback means 18, for receiving and transmitting to the user hands 19 a feedback force from said real instrument with respect to the movement of the hand and of the simulation procedure stored in the memories 15 of the computer. Such feed back means are formed, for example in the following manner.

First, it is observed that the locking system is situated on a feedback control system member, held on by two metal leaves allowing feedback working in pulling and pushing.

Finding the relation between the user's force applied on the locked tool and feedback control system member response is the problem to be solved.

Here, the feedback control system member response depends on the leaves' deformation, caused by the force applied on the locked tool. The deformation of the leaves has to determine a feedback control system member response so that the users feel a real tactile-feedback.

The amount of leaves' deformation is proportional to the force applied by the user and has to be detected to be used in determining the feedback-response.

It was therefore applied, on one of the leaves, a gage to detect the amount of deformation, by measuring the change of its resistance. From the tests made on the managing tool dedicated elements (tool wagon), the range of the force applied on the locked tool was about $\pm 3$ Newton and provided an electronic signal which is amplified.

The amplified signal is then sent to the electronic case that facilitates or contrasts the managing tool dedicated elements (tool wagon) movement, using a motor.

The output voltage change is at least 10 mV with a voltage supply of $\pm 2.5$ V to be processed by the instrumentation amplifier.

The leaves' thickness is chosen considering an excursion of the feedback control system member of maximum $\pm 0.3$ mm and considering a minimum leaves' thickness that couldn't permanently be deformed by the applied force.

The measurement tests have been implemented using a strain indicator and recorder and a 3D control system:

- First test session : Extensometer mounted on harmonic steel leaf, thickness 0.3 mm and the other leaf with same thickness.

- Second test session : Extensometer mounted on harmonic steel leaf, thickness 0.2 mm and the other leaf with same thickness.
- Third test session : The 0.4 and 0.5 mm leaves are too much rigid.

Finally it appears that using as support the 0,3mm leaf, the system can be prevented from abrupt movements so that the feedback control system member does not go in collision with the mechanics fixed (cones of entrance and exit cones).

For the conversion factor $\mu\varepsilon/\varepsilon$ -> mV/V, a 350 $\Omega$ full-bridge extensometer has been selected.

The core of the feedback control system is a deformation transducer that measures the deformation of an extensometer of a type known per se sited on one of the metal leaves changing output voltage. It was considered an open-faced constantan foil gages with a thin, laminated, polyimide-film backing. This gage is recommended for use in precision transducers and characterized by low and repeatable creep performance.

Also recommended for stress analysis applications employing large gage patterns, where the especially flat matrix eases gage installation.

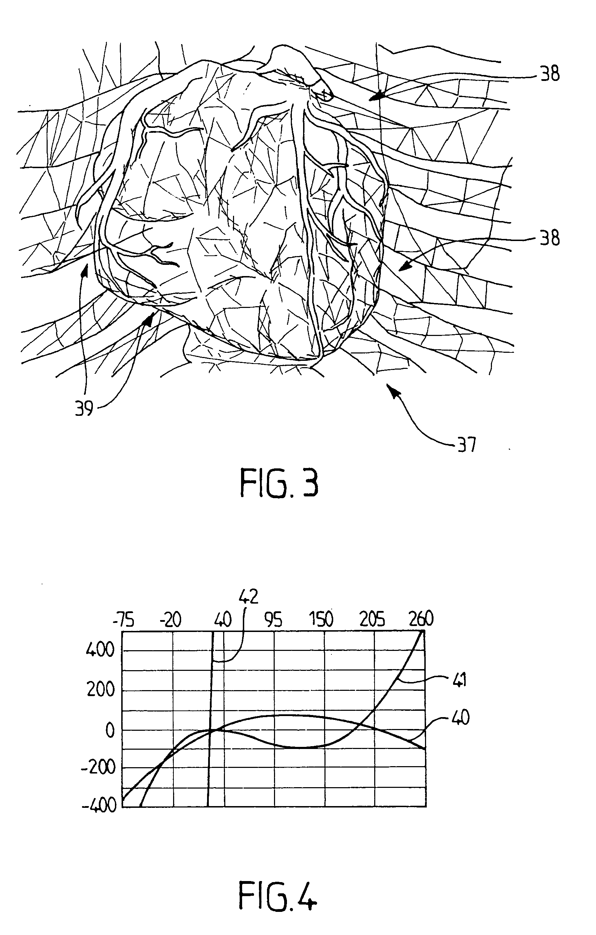

The extensometer used is a compact full-bridge pattern for use on small, double-bending beams, axial grid centerline spacing 0.250 in (6.35 mm), resistance in $\Omega$ is 350$\pm$0.2% and gage self-temperature compensation, the approximate thermal expansion coefficient in ppm/°F of the structural material on which the gage is to be used, follow the characteristics shown on figure 4, where K-Allay (curb 40), A-Allay (curb 41) and D-Allay (curb 42) evaluate according to said curbs, with absciss in O and Thermal output in ue along the Y axis.

It is observed therefore that deformation is proportional to the force impressed to the locked tool.

Transducer's output voltage are used to control motors that, according to the impressed force, help the independent dedicated system's movement.

An example of tables which could be used with the invention is provided hereafter.

**Table 1**

| Force (N) | $T_+$ ($\mu\varepsilon/\varepsilon$) | $T_-$ ($\mu\varepsilon/\varepsilon$) |
|---|---|---|
| 3 | 1095(0,20mm) | 1080(0,18mm) |
| 2,5 | 920 | 890 |
| 2,0 | 730 | 670 |
| 1,5 | 530 | 530 |
| 1,0 | 385 | 345 |
| 0,5 | 185 | 180 |

**Table 2**

| Force (N) | $T_+$ ($\mu\varepsilon/\varepsilon$) | $T_-$ ($\mu\varepsilon/\varepsilon$) |
|---|---|---|
| 3 | 2340(0,6mm) | 2290(0,57mm) |
| 2,5 | 2120 | 1900 |
| 2,0 | 1660 | 1530 |
| 1,5 | 1250 | 1200 |
| 1,0 | 860 | 830 |
| 0,5 | 460 | 450 |

The feedback of the device is for example obtained through an electronic card with two custom programmed pic of the series 16f876.

Here three control signals have been withdrawn from the electronic board: direction control, PWM-out, motor enable. The signals are sent to the 16f876 pic and managed by a feedback software of the type as follows (in picbasis).

The software loaded on the 16f876 pic waits for the activation data of the feedback status sent by the PC. In these data there is the value of the gain constant of the derivative integrative proportional system that the feedback implements. When the data string is sent, a local retro-action starts. The local retro-action takes the digital value of the extensimeter - opportunely converted by the analogical digital converter of the pic 16f876 - as reference signal. The relation implemented in the algorithm that manages the retroaction is:

$$x=(a-b)*c$$

with :

a : initial value of the strain gage;
b : it is the current value of the strain gage;
c : the value of the gain constant;
x : pic output (pin C1) that it is a PWM value that interacts on the motor's drivers to send command to the motor.

Attached A

Include "modedefs.bas"

```
DEFINE OSC 20

DEFINE HSER_CLROERR  1 ' SR reset of the USART
DEFINE HSER_RCSTA 90h
DEFINE HSER_TXSTA 24h
DEFINE HSER_SPBRG 0Ah

'sampling time
DEFINE ADC_SAMPLEUS 50
DEFINE ADC_BITS 8
DEFINE ADC_CLOCK 3

'output port settino of the PWM signal
'portc.2
DEFINE CCP1_REG  PORTC
```

```
B0        var byte
INSTAT        var byte
Num     var byte
Konst     var byte
ValueFeed var word

ADCON0 = 00000001
  ADCON1 = 00001110
TRISA = 255
TRISB = %11000000

START:
        PORTB.2 = 0  'DIRECTION CONTROL
        PORTC.2 = 0  'PWM OUT
        PORTB.4 = 0  'ENABLE MOTOR
        PORTB.5 = 1  'LED MONITOR
        'POTRTB.0 E PORTB.1  DIP SWITCH SETTAGGIO

        IF (PortB.0=0 AND PortB.1=0) THEN
         Num=1
        ELSE
         IF ( PortB.0=1 AND PortB.1=0) THEN
                Num=4
        ELSE
                Num=9
         ENDIF
        ENDIF
        PAUSE 4000
        ADCIN 0,INSTAT
        PORTB.5 = 0 ' END INIZIALIZZATION
        B0=170

WAIT:
        HSERIN [B0]  'HEX AA
        IF (B0 = 170) THEN
                HSERIN [B0]
                IF (B0  =  Num ) THEN
                        GOTO Verifica
                ELSE
                        GOTO  PWMREG
                ENDIF
        ELSE
                GOTO WAIT
        ENDIF

Verify:

        HSERIN [B0]
        IF (B0 = 39) THEN        ' Hex 27
                HSERIN [Konst ]
                PORTB.5 = 1
                PORTB.4 = 1
                GOTO PWMREG
        ELSE
```

```
IF(B0 = 23) THEN          'Hex 17
        Konst = 0
        PORTB.4 = 0
        PORTB.5 = 0
ENDIF
GOTO WAIT
ENDIF

PWMREG :

ADCIN 0,B0

ValueFeed  =  (Konst * (ABS( B0 - INSTAT )))/16

IF ( B0 > INSTAT )THEN
        PORTB.2 = 1 'inverse
ELSE
        PORTB.2 = 0
ENDIF


IF(ValueFeed<255) THEN
        HPWM 1,ValueFeed.BYTE0 ,15000
else
        HPWM 1,255,15000
ENDIF

GOTO WAIT
END
```

For launching the principal software executable file, in order to implement the process having the different features of the embodiment of the invention more particularly described here, a first java interface is loaded and allows to select the type of procedure and to choose one of the available cases.

In each case there is a description of the patient history.

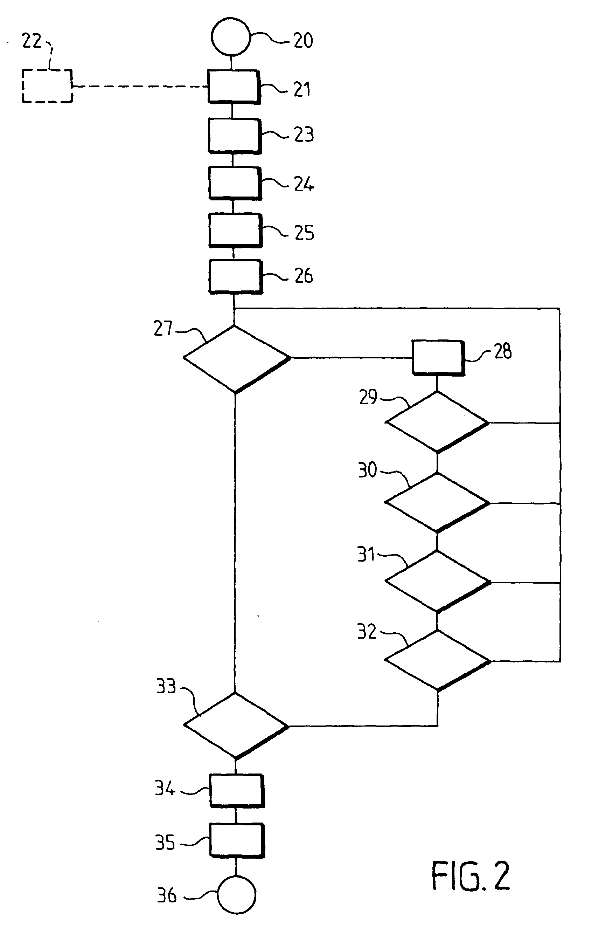

More precisely it is now described in reference to figure 2 a preferred embodiment of the method of the invention for simulating the manual intervention of a user on a simulated cardiovascular system of a body with a device such as the one shown in reference to figure 1.

Once the case has been selected the following applications are loaded (step 20) :

- graphic motor that manages the fluoroscopy visualization
- control of the electric connection and the state of the hardware: if the hardware is not correctly connected or all the electronic cards deticated to data signals transfer are not detected, some error messages are produced and the interface loading is interrupted
- initialization of the apparatus: the carriages are moved to their zero initial position and a test on the opening and closing electromagnetic block system is performed
- if the control of the electric connection and the state of the hardware have had positive result, the graphical user interface is loaded and it is possible to select the devices and to check the projections of the fluoroscope and the movement of the table of the patient,
- generation of the ecg of the patient

The cardio vascular system of the patient, for instance the one of the real patient to be operated later on, is then loaded (21) in the computer of the device.

According to the invention such cardio vascular system has been modelled with a mesh geometry (step 22) as it will be more precisely described hereafter. The graphical user interface introduces on its part a list of the available devices classified by functionality and associated to a carriage.

The selection of a device activates the sensors dedicated to this type of device recognition.

When the device introduced by the user (step 23) reaches the detection system on the dedicated carriage, a signal is sent to an interface (hereafter the haptic interface) (step 24) that activates the locking system related to that carriage and have the device locked to the carriage (step 25).

The position of the device, and therefore of the carriage, is connected to the motor's encoder which provides a value used to manage the movement and the feedback of the carriages. Such value is brought to zero in the phase of the apparatus' initialization and is updated 20 Hz.

An active cart movement determines a variation of the corresponding encoder value. Such variation is detected by the haptic interface that update the positions of all the following carriages, not yet activated, maintaining the distance between them constant.

The values of the encoders are sent to the high-level software that manage the devices visualization.

The system is provided with additional peripheral:

- a syringe for the contrast liquid; the syringe is connected to a flow sensor that detects the quantity of air injected by the user transforming it into an electric signal that through the haptic interface is sent to the high-level software that elaborates it and visualizes the effects of it by the graphic motor

- the indeflator; it is connected to a sensor that detects the pressure practiced by the user and turns this information into an electric signal that through the haptic interface is sent to the high-level software that elaborates it and visualizes the effects of it by the graphic motor

- Pedals : the pressure of the first pedal sends an activation/deactivation signal of the fluoroscopy to the high-level software through haptic interface; the pressure of the second pedal sends through the haptic interface a signal that activates fluoroscopy image or movie capture in the high-level software.

Therefore the user is able to practice easily and with a great impression of reality an operation which is simulated in real time, with very efficient and accurate pedagogical results.

Such operations are controlled (test 27) with feedback means related to the configuration of the cardiovascular system which is particularly efficient due to the mesh geometry modelling.

Such modelling also authorizes additional inputs which renders the simulation more real, i.e. the simulation of blood pressure (step 28), collision with heart attack (test 29) expansion produced during the cure of stenosis (step 30), simulation of spasm (test 31) and modification of the veins elasticity (step 32) during the virtual displacement of the instrument within the cardiovascular system.

At the end of the operation, a final test 33 for checking that the problem has been correctly cured, mainly by visual check of the screen display, is provided, then the instruments are virtually withdrawn in 34 by the user from the simulated cardiovascular system before deactivating the clamping means in 35 and withdrawing (step 36) the instruments from the device.

With the method of the invention, a mesh structure is used for modelling the body of a patient as provided on figure 3.

A mesh 37 is a geometric structure of flat or curve surfaces 38 composed of adjacent polygons 39.

Shape and dimension of the polygons are variable, therefore the mesh can easily represent both flat surfaces (a little number of big polygons) and curves surfaces (a big number of little polygons).

The geometric structure of the mesh is then introduced in the system of physical simulation and can simulates the entire human vascular system.

In fact, the geometric model of the surfaces can be widened with physical property such as the elasticity allowing to simulate the vascular system deformation due to blood pressure, collision with an operating device or expansion produced during the cure of the stenosis, which will authorize a much more realistic simulation as provided with the present invention.

More precisely an embodiment of the method of simulation used with the invention provides use of algorithms which authorizes correctly the tree-structure of the vascular system and/or the arterial and the venous one together with the mesh technic.

Differently from the prior-art which took advantage of pre-calculated stenosis' models, it doesn't exist pre-calculated lesions in the method of the invention which provide lesions belonging to the same one mesh of the constructed anatomies.

A more greater freedom in modeling stenosis assigning anatomical shapes and articulated physical property is then surprisingly obtained.

A possible algorithm for this mesh structure use in simulation is provided hereafter.

//* It is calculated the pressure that the device expresses on the tissue taking into account the inducible of the tissue and the characteristics of the stenosis (shape, extension, hardness). This value of pressure is used in order to modify the points of the mesh and in order to adapt the device to the shape of the vase in real time.

```
FOR (AllTrianglesOfVesselMesh)

IF (Collide(Triangle, Balloon))

    {

        //* The direction of the mesh expansion is estimated for every triangle


        Direction=CalculateDirection(Triangle)

        Triangle.x = Triangle.x+Pressure*Direction.x

    Triangle.y = Triangle.y+Pressure*Direction.y

    Triangle.z = Triangle.z+Pressure*Direction.z
```

It is remarked that the flexibility of this kind of modelling system allows to perform different anatomical shapes according to what happens in nature.

For hemodinamists, interventional radiologists and cardiologists, it is a normal situation that blood vessels shapes change for different patients.

Therefore the possibility to create different anatomical shapes allows to be able to offer different simulation sessions that are didactically more effective.

It is then possible, with the present method, to study the deformability, resistance and physical behaviour of the organs and tissues, due to a more flexible basic anatomical reconstruction system, which allows to simulate more clinical cases and more different anatomical shapes.

With the mesh structure, complications can be better dealt with.

Furthermore, in real life spams and dissections can occur during a less-invasive hemodinamic intervention.

A spasm is a contraction of an artery with a consequent reduction of the blood flow, which can determine a cardiac frequency variation, high or low, and can change the ECG waveform display.

A total or partial occlusion of the artery with a device can determine a spasm.

In the simulator of one embodiment of the invention, it is possible to simulate a spasm which is obtained by changing the cardiac heartbeat animation frequency, the ECG waveform and the diffusion of the contrast liquid in the vessel.

Such spasm simulation involves for instance the use of an algorithm as follows :

```
IF (Spasmo)

    {

            HeartAnimation(SpasmoHeartRate)

            ECGDiagram(SpasmoHeartRate)

    }
```

With the method of another embodiment of the invention as described here, it is taken care of the fact that the walls of the arteries are constituted from three overlapped layers of tissue.

In real practice, a bad manipulation during a procedure or a wrong choice of the tool could damage the vessel.

For example the tip of the device can tear one or all of the tissue's layer and pass through them instead of going through the vessel.

The doctor in this case finds a greater resistance to the advance of the device.

In the simulator of this embodiment of the invention the dissection is realized showing the device in its position coinciding with the wall of the vase and giving back a tactile feedback adapting continuously to the performing of the dissection.

It is here emphasized the progress it involves in comparison with the prior art and the importance of such possibilities in medical procedures.

Spasm is a suffering state of the patient and must immediately be identified by hemodinamist so that he can proceed to the opportune procedures.

Dissection is also a serious complication because of the risk to perfore the artery.

However if spasm and dissection happen during a less-invasive intervention, the procedure must be continued by the vascular surgeon.

In the simulator the spasm is reflected in altered cardiac heartbeat animation frequency, abnormal ECG waveform and less smooth dispersion of the contrast liquid in the vessel

An other point has been improved in the embodiment of the invention more particularly described therein. It is due to the fact that vascular system can be assimilated to an hydraulic net, which contains a fluid moved by a pump (the heart). A mathematical model of contrast fluid's diffusion has here been developed, allowing the fluid to be injected in whichever point of the net.

The model is arranged so that the course of the pressure caused by the hearth can be freely modelled, making possible and easy the simulation of different anatomies, pathological and physiological conditions.

The model considers the sections of all the veins interested by the blood stream, the veins' elasticity and the eventual presence of stenosis.

It gives at each moment the value of contrast fluid density in each position of the vascular net, and allows its visualization in the fluoroscopic image, graphing the different colour of blood vessel's surface.

It is therefore possible to regulate the flow rate and the duration of fluid injection as the model captures and memorises the amount of injected contrast fluid.

More precisely the physical model for the contrast liquid is a fluid-dynamics net model, that means that in every moment length and section of the net are known.

The simulation algorithm takes into account different parameters i.e. : heart rate, curve of pressure of the cardiac pump (the heart cycle can be appropriately modified), vessel's sections, connections between vessels, length of the vessels, presence of the stenosis and complications.

Contrast liquid density is calculated in real time along all the vascular system therefore automatically authorizing a time evolution of the contrast liquid simulation.

The contrast liquid visualization algorithm consists therefore in a perfect mapping in each fraction of the vessel which could be described as follows.

This algorithm is first based on a contrast fluid library which has the following functionality:

- Management of the human vascular system, with a tree model structure, based on a monodimensional approximation of the vessels;
- Simulation of the blood circulation approximated by an equivalent hydraulic-net model and a simplified mechanical model of the heart;
- Simulation of the contrast agent's transport approximated by a transport model of a passive scalar inside the coronary net.

Furthermore, concerning the interface, the API is for instance and here designed to coronography applications and it is structured to allow the following operations:

- Instance of a standard vascular tree dedicated to the systemic circulation, pulmonary and coronary. The vascular tree is simplified to allow the real time simulation;
- Instance of right and left coronary tree is get with a descriptor of the tree structure and the length and radius of every branch. The library transform these information in the physical constants, required by the simulator, using parametrization available in literature;
- Instance of a simplified cardiac model;
- Assignment of stenosis' conditions on coronary vascular net specifying relative position, length and middle radius;
- Assignment of default values for the control parameters of the cardiac rhythm;
- Activation/ deactivation of the flow and transport simulator;
- Injection of contrast liquid at the base of a tree coronary vascular net;
- Reading the value of contrast liquid concentration in every point of the coronary vascular trees.

Description of the system's components.

The principal components of the simulator are the followings:

- generator of input signals : in particular, a generator of blood pressure's signal, based on a parameterization of the cardiac behavior;
- simulation of the hemodynamic flow : it deals with a mono-dimensional flow model with assembled parameters;
- simulation of the flow of the liquid contrast.

Generator of input signals.

The input signal for the simulation of the hemodynamic's system is a pressure signal, that is obtained through parameterization of the cardiac behavior.

It is used a simple periodic generator of pressure, obtained through periodic interpolation of a pre-assigned pressure curve.

Simulation of the hemodynamic flow.

The hemodynamic flow inside the vascular system is calculated through a simple assembled parameters model, that considers the various branches of the blood vessels like electric nets, whose parameters depend on the geometric characteristics of the considered branches.

The components that are modelled inside the electric net, equivalent to the vascular system, are the followings:

- the cardiac pump, modelled as an electric scheme, characterized by constant resistances, independent from the volume (except the Cavum Vein and the systemic arteries), from constant viscosity of the blood, and from elastic walls of the vessels
- generic arterial vessel, modelled through a electric parameters-assembled RLC net.
  The net parameters are calculated considering the vessel's length and the section, through the following formulas:

$$R = \frac{8\mu l}{\pi r^4}; \quad L = \frac{\rho l}{\pi r^4}; \quad C = \frac{2\pi r^3 l}{Eh};$$

where $\mu$, p, E, h are, respectively, blood viscosity, blood density, the modulus of vessel elasticity and the thickness of the wall, that now is approximated with h = 0.16r.

- arteries connector, equivalent to a short electric circuit, and used for modelling non binary trees of arteries.
- stroke of terminal artery, equivalent to a RLC net with a load. The RLC parameters are obtained through the length and the radius of the artery as a generic branch of artery, while the load resistance is approximated with a piecewise constant function dependent from the section of the blood vessel.

Contrast liquid transport.

The contrast liquid is modelled as a passive scalar inside blood vessels and it is described as mean concentration in every vessel section. It is a function c(x,t) with x varying from 0 to 1, 0 is the value at the tube head. The evolution of the c is based on the following limited difference equation:

$$c(x, t+1) = c(x, t) - \frac{\Phi \Delta t}{a \Delta x}(c(x, t) - c(x - \Delta x, t)) + \frac{D \Delta t}{\Delta x \Delta x}(c(x + \Delta x, t) + c(x - \Delta x, t) - 2c(x, t))$$

$\Phi$ ,a,D are respectively the entering flow, normal section of the blood vessels and the diffusivity of the passive scalar.

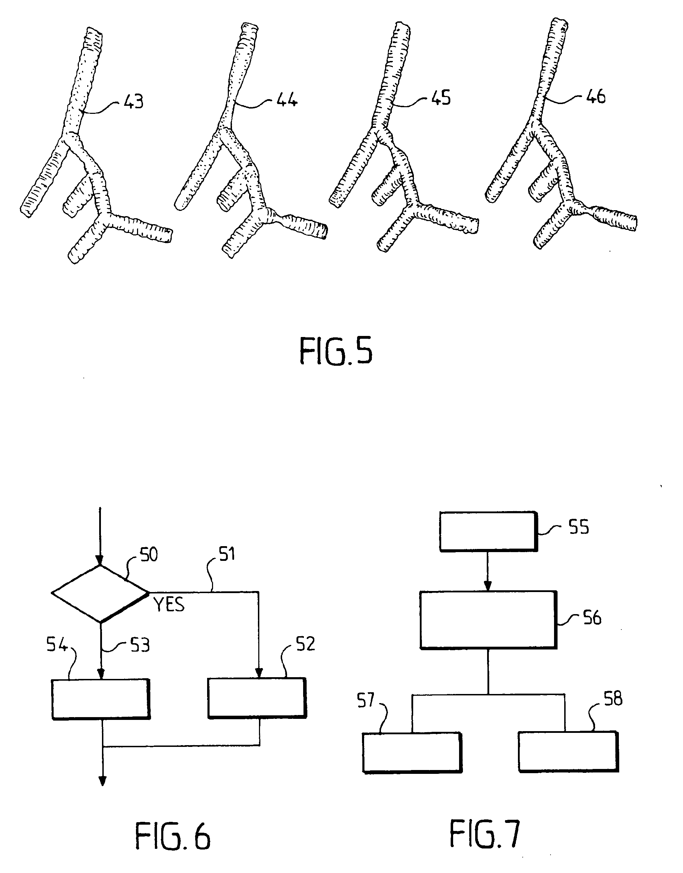

The integral curve that solve the flow and transport equations is a 4th-order adaptive step Runge-Kutta. Figure 5 shows an example of the simulation of the contrast liquid transport inside several simplified model of the vascular tree 43, 44, 45, 46.

On the contrary (see here above) the mesh consists of triangles. Due to this specific aspect of the method as described and corresponding to an embodiment of the invention, the calculations are more express.

In other words, for every triangle pertaining to the anatomy mesh, it is pre-calculated the correspondence with the physical model that represents the course of the contrast liquid.

The visualization algorithm then interrogates the physical simulation algorithm of the fluid in order to obtain information concerning fluid density and the liquid percentage with which the triangles, that belong to the mapping of the net representing the fluid-dynamic system, must be coloured.

Here it should be noted that fluid contrast injection is indispensable to the hemodinamists in order to see in the fluoroscopic image the shape of organs crossed by the blood.

The possibility to verify the amount of contrast fluid injected allow the hemodinamist to trust he is practicing a real endovascular procedure.

This is because in a real procedure, the amount of contrast fluid used has to be reduced to minimum, in order to avoid damaging the patient.

One of the other advantage of this simulation is that it renders the simulation incredibly realistic because it considers the effective point of fluid injection without considering pre-calculated outlines, far from the really operating conditions, and because it considers the effective point of fluid injection and does not show a flat black patch that appears within a given outline

Furthermore the model takes into account the presence of blood in the vessels and the interactions between two fluids (blood and contrast liquid). For this purpose, the model of the blood pressure, as it flows through the vessels, takes into account: section, elasticity and presence of stenosis, while it captures and memorises the amount of contrast injected fluid.

In an other embodiment of the invention, it is furthermore implemented a fluoroscopy's algorithm, based on NVIDIA technology. This technology, generally used to compute special 3D real-time effects rendering for example industrial research and development as in car and vehicle production was not implemented in the present field for practical reason.

With the algorithm used in one embodiment of the present invention, which involves calculation of the thickness of one or more objects so the overlaps of the objects can be managed working to pixel levels (picture element), it has been possible to use this technology.

The structure of the algorithm allows to modify every object's pixels colour (more real- simulate x-ray crossing several layers having a better image definition).

All computations are managed from GPU Graphics Processor Unit so that CPU (Computer Processor Unit) is involved in the physical simulation obtaining a greater speed in the calculations.

With the invention it is therefore possible to upgrade permanently the result of simulator as it is open to new technologies such as the "floating point blending" which ultimately accelerates the speed of the algorithm due to a less computational complexity of the shaders.

The "floating point blending" develops the realism of the rendering increasing precision from 12-16 bit integer to 16-32 bit floating point.

Furthermore, and as indicated earlier, using NVIDIA technology, the real-time rendering can be offloaded from the CPU to high-performance Graphics Processing Units (GPUs).

This technology reduces programming complexity using a dedicated high-level language for graphics. This method for programming real-time pixel and vertex effects eliminates the need to write applications with extensive low-level assembly code. With built-in abstractions and optimizations, a new graphics programming language can increase the number of applications with cinematic-quality effects.

The Cg programming language used with the programming of the algorithm involved with the invention, provides ease and speed of programming of special effects and accelerates delivery of real-time cinematic-quality graphics experiences.

The visualization applications that take advantage of Cg shader technology get the most realistic visual effects. Cg runtime feature can benefit from the addition of a new GPU when it becomes available without recompiling or upgrading the software.

Furthermore Cg allows for a range of high-fidelity film effects to be efficiently merged into fluoroscopy application and executed in real time such as motion blur and other camera effects and accurate skin, muscles.

An example of implementing algorithm is provided thereafter.

It is here provided a shader realized with the CG that executes the removal of two buffer: FrontBuffer e Back-Buffer.

```
//**********************************
//*                 inputs struct                    *
//**********************************
struct inputs{
        float2 text             : texcoord0;
};


//********************************
//*                out struct                      *
//********************************
struct outputs{
```

```
        float4 color        : color0;
    };


    //************ *********************
    //*                  fragment program                    *
    //**************************************
    outputs main(inputs in,
                    uniform float4 decodevalues,
                    uniform samplerrect frontbuffer,
                    uniform samplerrect backbuffer)
    {
    outputs out;
    float4 texture,texture2;


        texture=texrect(frontbuffer,in.text);
        texture2=texrect(backbuffer,in.text);


        texture2 = texture2-texture;


        texture2 = dot(texture2,decodevalues);


        out.color=1-texture2;


        return out;
    }
```

Computerized visual effects involve the manipulation of display data.

Shaders--the programs and parameters necessary to implement an effect on a set of pixels or vertices-were traditionally written for a specific GPU. The Cg Language provides the constructs for creating platform-independent shaders.

The NVIDIA Cg Compiler works with a C-like language for programming shaders on GPUs. This high-level approach offers also several benefits when compared with assembly-level programming such as simplicity, flexibility, reusability, automatic optimisations and low-level access.

As a runtime compiler, UCA automatically takes advantage of the hardware that is available at the time the shader application is executed.

Application performance is also enhanced because the NVIDIA Cg Compiler includes optimizations for NVIDIA GPUs making it possible to get the best performance out of the hardware without every shader developer learning the intricacies of every platform.

Using specific profiles when writing shaders, developers can easily write for multiple targets. Less capable programmable GPUs can be addressed with separate programs that may not use the full extent of the language, just a subset of its flexibility.

Vertex and pixel shaders are used in multi-pass rendering to generate a measure of the object's thickness at each pixel. The thickness at each pixel is then used to produce the colors of the object on screen.

With the algorithms used with the invention, thickness information is computed each time from the appropriate point of view, and the result is a true volumetric rendering of ordinary polygon objects.

No preprocessing of object data is required, and the result is a volumetric technique suitable for interactive dynamic scenes.

An efficient method which is further described here after, is used to properly render any closed convex or concave mesh as a thick volume and to handle any intersection cases where opaque objects penetrate the volumes to overcome the effects of aliasing in the per-pixel thickness information.

This algorithm can be summarized as follows :

The procedure is divided in three parts:

a) Rasterization of the visible faces of all the present objects in the scene. After this operation in a FrontBuffer data structure that is used from the GPU are stored the sum of all visible faces depths from the actual point of view;

b) Rasterization of the invisible faces. After this operation in a FrontBuffer data structure that is used from the GPU are stored the sum of all invisible faces depths from the actual point of view;

c) Through an abstracting shader is done the difference FrontBuffer - BackBuffer pixel by pixel so that is possibile to obtain the information about the objects thickness. This information is use to set the pixel's color.

It is suitable for volumes of single-scattering material. Material where light arriving at each pixel is the result of only one scattering interaction in the material, thus the total amount of light is a function only of thickness.

As the visible thickness increases, the number of scattering particles increases and so does the probability of scattering. Scattering may both add light and attenuate transmitted light.

The technique for rendering objects as thick volumes start from traditional 3D rendering.

It involves rendering to off-screen render-target textures, rendering depth information as RGBA colors, using vertex shaders and textures to encode information, and using alpha blending to add and subtract high-precision encoded depth information.

One advantage of this technique is that the rendering does not change in order to handle various intersection cases and camera positions.

No extra passes or knowledge about the objects or scene is required as long as the depth complexity of the volume objects remains below a certain adjustable limit.

The depth complexity limit depends on the precision of the thickness information and the number of bits of each color channel used to hold the thickness information. The trade-off between depth complexity and precision can be adjusted from frame to frame. A depth complexity of 16 or 32 volume object faces can be rendered with 15 or 12 bits of depth precision in a single pass.

On hardware that supports blending to floating point render targets, there is no limit to the depth complexity that can be handled.

More particularly, the algorithm for computing thickness considers that the polygonal object is rendered to off-screen render targets using some measure of depth interpolated across the polygons, and that the thickness is computed at each rendered pixel.

At any given pixel, the depths of all of an object's front faces at that pixel are summed as well as the depths of all back faces are summed, the thickness through the object being the back face sum minus the front face sum.

For a given pixel on screen, the thickness through the objects is the sum of the depths of all front faces at that pixel subtracted from the sum of the depths of all back faces at that pixel.

Depth is calculated at each vertex as part of the standard 3D view transform.

Programmable shaders and a few render-to-texture passes, which are known per se, are added to render ordinary polygon objects as thick volumes of light scattering material.

With this technology are obtained high precision values using 8-bit-per-component render targets, objects intersecting handling and occluding any volume object shape, and good eliminating aliasing artifacts.

The approach works for any viewpoint in the scene, and it is then easy to animate the volume geometry. The technique can be used on the large installed base of Direct3D8 ps.1.3 hardware.

Using thickness to determine the appearance of objects was not suggested nor taught and did offer exciting new possibilities for real-time interactive rendering. Intuitive controls and color ramps govern the appearance of the volume objects, though more sophisticated treatments of scattering could also be employed.

The fluoroscopy's algorithm being based on NVIDIA technology, there exists an algorithm centralized on the calculation of the thickness of one or more objects, so the overlaps of the objects can be managed working to pixel levels (picture element)

The structure of the algorithm allows to modify every object's pixels colour (more real- simulate x-ray crossing several layers having a better image definition).

An example of algorithm used to codify the object's thickness "by-pixel" can be as follows :

```
Outputs main(Inputs IN)
{
Outputs OUT;
float4 Texture,Texture2;

01)     Texture=tex2D(EncoderTexture2d,DepthValue);
02)     Texture2=tex1D(EncoderTexture1d,DepthValue);
03)     OUT.Color.xy    = Texture.xy;
04)     OUT.Color.zw    = Texture2.xy;

        return OUT;
}
```

The DepthValue pixel's is obtained using two textures, the first one is bi-dimensional and the second one is mono-dimensional. These textures are substantially two images, 2D or 1D, containing values that are chosen during the execution of the mentioned program.

Lines 01 and 02 store the values in the temporary variables "Texture" and "Texture2". The stored values in "Texture" and "Texture2" are written in the output buffer in the lines 03 and 04.

This cycle is executed for every pixel of all the objects contained in the virtual world of the process, the algorithm decoding the generated data for obtaining two buffers.

In the first buffer the distances of all the pixels from the camera of hidden objects' faces are obtained as in the second buffer the distances from the camera of the visible objects' faces are stored.

The right thickness and the fluoroscopy image are obtained working on these data.

A fluoroscopy's colouration algorithm to be used with the invention is for instance as follows :

```
Outputs main(Inputs IN)
{
Outputs OUT;
float4 Texture,Texture2;

01)     Texture=tex2D(FrontBuffer,CurrentPosition);
02)     Texture2=tex2D(BackBuffer,CurrentPosition);
03)     Texture2 = Texture2-Texture;

04)     Texture2 = dot(Texture2,DecodeValues);

05)     OUT.Color=Texture2;

        return OUT;
}
```

This algorithm decodes the buffers' values to obtain the fluoroscopy visualization.

Lines 01 and 02 reads the values stored in the buffers that contain the depth of each pixel of the previous calculated scene's objects.

In line 03 is calculated the thickness of every scene's pixel. The thickness has values comprised between 0 and 1. In the overlapping zone the thickness is near 1.

In line 04 the data are decoded : pixels are transformed into the float original format, drawn on the frame buffer and visualised.

The vascular system and its interaction with the introduced devices are physically simulated through shape, elasticity and resistance, as this model allows the physics modelling and the right interaction of each new device.

For example the EPD, a filter that is delivered in the arteries, against the flow of the blood, in order to stop and to collect fragments that were detached from the stenosis.

Another example is the stent of newest generation, with an "Y" shape, that is used in the case of Abdominal Aneurysm Aorta.

The prior-art algorithm allows the expansion of the balloon until it attains the walls of the vase, no ulterior expansion being possible. Such algorithm previewed for balloon an expansion with linear course regarding the pressure.

The algorithm according to the embodiment of the invention more particularly described here authorizes to go further, as it is among other more detailed and takes care of the complexity.

More particularly physical model with which the balloon is represented, consists of n elements independent in their expansion, i.e. provides series of spheres of specific diameters.

Every sphere's expansion is a linear function of the pressure to which it is expanded until the spheres are not in collision with the walls of the vase (mesh).

If there are collisions with the walls of the vase a model of resistance dedicated to the mesh that are interested in the interaction is then considered.

Here, every contact point on the mesh exercises force on the sphere that composes the balloon and every sphere pertaining to the balloon exercises its own force on the mesh.

Accordingly, the expansion is not linear, but is proportionally limited by the resistance exercised between the mesh and the contact points.

Every mesh's point can be regulated with its own rigidity (resistance) and such variable resistance of the points pertaining to the mesh allows a full control on the mesh.

As an example it is possible to create lesions with aspect and rigidity of various structure.

The mesh deformation is on its part based on the pressure exercised from the balloon and at the same time the balloon must continue to expand based on the supplied pressure.

Working on interaction's force between balloon and mesh we have to take into account the possible use of a balloon whose diameter to the nominal pressure may be bigger than the diameter of the vase in which it is inflated, the force with which the balloon interacts with the mesh grows and may break off the vase.

The balloon's visualization is obtained by interpolation of a curve called "spline" that gives good fluoroscopy results.

An example of the relevant model used for balloons operating in pseudo code is provided.

```
FOR(i=1 TO NumBalloonSpheres)
          {
```

//*Physics: The radius of the sphere depends on the pressure exercised between the mesh and the sphere itself. If the central spheres are in collision and the edge sphere are not in collision, the result will be a typical hourglass-shape

PressureOfSphereBalloon=PressureFunc(BalloonSpheres[i])

RadiusSphere=CalculateRadius(BalloonSpheres[i],

PressureOfSphereBalloon)

//*Dati per Rendering

AllRadius[i]= PressureOfSphereBalloon

AllCenter[i]= Center(BalloonSpheres[i])

}

//*Rendering

CalculateSpline(AllRadius[],AllCenter[])

DrawSpline()

The physical model of the stent consists of a metallic mesh. Every node of the metallic mesh is a particle with own physical properties connected to the other nodes according to an established design. The behaviour of every node can be assimilated to a sphere's behaviour.

The spheres that represent the stent are compliant with the associated balloon following its behaviour. If the balloon is expanded until the walls of the vase, then also the nodes that compose the mesh of the stent comply to the walls of the vase.

A self-expandable stent model is close to the standard stent one.

Advantageously the mesh deformation is based on the pressure exercised from the balloon while at the same time the balloon must continue to expand based on the supplied pressure, and wherein the balloon's visualization is obtained by interpolation of a curve.

Every node of the metallic mesh is a particle with its own physical properties and it is connected to the other nodes depending on a pre-established design.

When a self-expandable stent is deployed, the spheres that represent the nodes of the mesh are released assuming a speed that depends on their own physical properties and therefore the expansion of the simulated stent according to the invention follows physics of the expansion of a metallic mesh.

The catheter is modelled with a sequence of cylinders interconnected with a two degrees of rotational freedom's joints.

When the cylinders clash with the walls of the mesh, they follow the physical laws with which they have been modelled.

Furthermore, systems spring-damper are applied to the bodies in every joint so that for every joint it is possible to define dumping and stiffness.

A torque is therefore provided for every direction of movement. The force that acts on every joint is a function of the torque force that is a function of the angle and the angular velocity.

The calculation of the elastic force function of the $Ke\theta$ angle and the calculation of the viscous force based on the angular velocity $Ke\theta$' are then applied as a torque to the joint in the normal direction to the angle so that it is possible to give physical properties and shape to guides.

In order to simulate the motion of the catheter in a viscous environment forces are applied, that are obtained through an algorithm that works on every single body of the multilink chains, to the catheter.

Such algorithm is as follows :

FOR(i=1 TO NumBodies)

$$\{$$

$$Vel=CalcVel(Body[i])$$

$$Force.x=Kdamp*Vel.x$$

$$Force.y=Kdamp*Vel.y$$

$$Force.z=Kdamp*Vel.z$$

$$ApplyForce(Body[i], Force)$$

$$\}$$

Depending on the real time speed of the body's center of mass, it is calculated Kv and therefore the viscous force. The calculated viscous force is then applied to the body in normal direction to the center of mass.

The algorithm to model the guide wire is such to concur the local management of viscosity and elasticity. The tip of devices is therefore much more ameliorated.

All these new produced devices have specific ways of use and specific fields of application.

Therefore it is extremely important to have the possibility to follow a specific course of formation on specific device.

Interaction between vascular system and the introduced devices physically simulated through shape, elasticity and resistance, the improved interaction between device-anatomy (pressures on the walls of the arteries), device-device (perceive the resistance using two devices) and insertion of guidewire 0,035" before catheter are also better performed.

Smoother balloon dilatation and stent delivery (When a balloon is inflated it is possible to see it expanding little by little and when a stent is deployed it is possible to see its compliance with the vessel's wall) is obtained.

More and more small diameter devices (as new technology evolves), more realistic embolic protection devices, filterwire EZ, are possible to be implemented with such improvements due to a preferred embodiment of the invention.

Technology to realize new devices with their own characteristics and physical properties, such as Carotid Wallstent, NexStent, Picture, Interaction between two different tools is available with the new method of the invention.

In order to render the invention more understandable, concerning its result the following example in the real life can be provided. Here it exists many problems during the interaction between devices that are in an artery at the same time . For example, a balloon that slides along the guide who supports an EPD, cannot cross over a point, situated on the guide, because at the end of the guide a thickening is present.

The hemodinamist perceives this situation as an obviously resistance to the advance of the balloon.

In modelling device as in a preferred embodiment of the invention it has been introduced the possibility to add to the device's physical model the presence of such physical obstacles during the interaction.

An algorithm to implement this double feedback could be provided on figure 6.

A test 50 is provided to check if Pasiz Balloon >= Pasiz MarkerEpd. If yes (line 51) then the 2° Cart activated block is performed (52). If not (line 53) the 2° Cart Disable Block (54).

Therefore the haptic device gives back to the operator a realistic feedback of the interaction.

The customer perceives the same resistance that he would perceive if he really used two devices.

This effect is obtained varying in real time the advance resistance of the carriages.

The tactile feedback due to the interaction between two tools contributes to increase the realism of the simulation and to increase the didactic power of the simulator.

A simulator monitor visualizes therefore the characteristic curves of the patient's electrocardiogram.

The waveforms are generated from a model that modify them in real time depending on the characteristics of the simulated patient's and depending on the user's actions during the procedure.

The ECG curves algorithm connects the animation of the heart, the curve of the pump cardiac pressure, pertaining to the physical model of the liquid of contrast, and the model of visualization.

The visualization is in real time. The curves are able to represent also the spasm's effects, particular cardiac situations, tachycardia and lowering of the pressure.

Here, it shall be remarked that the ECG is fundamental during angioplasty or angiography procedures because it allows to constantly hold under control the patient's conditions and to correct or suspend the undertaken actions.

According to the algorithms used with the invention, the waveforms are generated from a model that modify them in real time depending on characteristics of the simulated patient during stenting and balloon operations user's actions during the procedure.

The simulation model of the heart and of the vascular system is responsible for performing the visible movement of the heart, performing the visualized waveforms, regulating the spread of the contrast liquid injected.

In the case of complication the simulation model of the heart and of the central vascular system communicates the change to the cardiac heartbeat animation and to the ECG, so that the variations are synchronized to advantages of the simulation's realism.

The simulation model of the heart and of the vascular system is responsible of performing the visible movement of the heart, performing the visualized waveforms, regulating the spread of the contrast liquid injected.

An example of the algorithm used accordingly is provided here after :

```
//* This pseudocode underline the dependency from the cardiac frequency of the heart
animation and the visualization of the ECG

        HeartAnimation(NormalHeartRate)
        ECGDiagram(NormalHeartRate)
```

When a complication arrives, like a spasm, the simulation model of the heart and of the central vascular system communicates the change to the cardiac heartbeat animation and to the ECG, so that the variations are synchronized to advantage of the simulation's realism.

A surface model realized with mesh give a simple solution to the anatomies construction based on real patients.

Working on images obtained with various tomography diagnostic techniques it is possible to have the exact anatomical structure of the patient and to simulate the interventional procedure before that it really comes.

A possible algorithm for this centration operation is provided in reference to figure 7.

Tomography data 55 are provided to instruction concerning information extraction (lengths vessels, radius of vessels, morphology) (56) in order to obtain Mesh Construction 57 and Centerline Construction (58).

The different algorithms provided herewith, written in their corresponding languages, are given in a no limitative way and could be, of course, substituted by algorithms in other languages having the same functionalities.

### Claims

1. A method of simulating a manual interventional operation by a user on the internal system of a body with at least two real instruments (3, 4, 5), with a device (6) comprising a longitudinal track (8), a plurality of moveable carriages along said track, each carriage having clamping means for securing one of said real instruments to said corresponding carriage, means for rotating and moving longitudinally said real instrument, visuals means, processing means for simulating a medical procedure and providing visual elements on said visual means and feed back means (18) for receiving and transmitting to the user hand (19) a feed back force from said real instrument with respect to simulation characteristic, **characterised in that** said method comprises the steps of recognizing a real instrument (23) to be fit within said clamping means, said real instrument within said clamping means to be moved longitudinally and rotated by the user and simulating said interventional operation after modelling (22) said internal system with a mesh geometry.

2. The method according to claim 1, **characterised in that** the internal system is the cardiovascular system.

3. The method according to any of the precedent claims, **characterised in that** it further comprises the step of simulating blood pressure (28).

4. The method according to any of the precedent claims, **characterised in that** it further comprises the step of simulating collision with heart attacks (29).

5. The method according to any of the precedent claims, **characterised in that** it further comprises the step of simulating expansion produced during the cure of stenosis (30).

6. The method according to any of the precedent claims, **characterized in that** spams are simulated (31).

7. The method according to claim 6, wherein the spasm is obtained by changing the cardiac heartbeat animation frequency, the ECG waveform and the diffusion of the contrast liquid in the vessel.

8. The method according to any of the preceding claims, **characterised in that** it further comprises the step of modelling the contrast fluid diffusion in relation with the veins elasticity (32), and the possible presence of stenosis.

9. The method according to claim 8, wherein it gives at each moment the value of contrast fluid density in each position of the vascular net, and allows its visualization in the fluoroscopic image, graphing the different colour of blood vessel's surface, thereby authorising to regulate the flow rate and the duration of fluid injection as the amount of injected contrast fluid model is captured and memorised.

10. The method according to claim 9, **characterised in that** contrast liquid density is calculated in real time along all the vascular system therefore automatically authorizing a time evolution of the contrast liquid simulation.

11. The method according to any of claims 9 and 10, for computing thickness of the simulated part of the human body, wherein the polygonal object is rendered to off-screen render targets using some measure of depth interpolated across the polygons, and that the thickness is computed at each rendered pixel.

12. The method according to claim 11, wherein at any given pixel, the depths of all of an object's front faces at that pixel are summed as well as the depths of all back faces are summed, the thickness through the object being the back face sum minus the front face sum,
and wherein for a given pixel on screen, the thickness through the objects is the sum of the depths of all front faces at that pixel subtracted from the sum of the depths of all back faces at that pixel and depth is calculated at each vertex as part of the standard 3D view transform.

13. The method according to any of the preceding claims, wherein the mesh deformation is based on the pressure exercised from the balloon while at the same time the balloon must continue to expand based on the supplied pressure, and wherein the balloon's visualization is obtained by interpolation of a curve.

14. The method according to any of the preceding claims, wherein it further comprises the step of simulating a stent by simulating a metallic mesh, every node of the metallic mesh being a particle with own physical properties connected to the other nodes according to an established design, the behaviour of every node being assimilated to a sphere's behaviour and
wherein, when a self-expandable stent is deployed, the spheres that represent the nodes of the mesh are released assuming a speed that depends on their own physical properties and therefore the expansion of the simulated stent according to the invention follows physics of the expansion of a metallic mesh.

15. The method according to claim 14, wherein the catheter is modelled with a sequence of cylinders interconnected with a two degrees of rotational freedom's joints, while when the cylinders clash with the walls of the mesh, they follow the physical laws with which they have been modelled.

16. The method according to the claim 15, wherein systems spring-damper are applied to the bodies in every joint so that for every joint it is possible to define dumping and stiffness.

17. The method according to any of the preceding claims, wherein the waveforms of the curbs are generated from a model that modify them in real time depending on the characteristics of the simulated patient's and depending on the user's actions during the procedure,
wherein the ECG curves algorithm connects the animation of the heart, the curve of the pump cardiac pressure, pertaining to the physical model of the liquid of contrast, and the model of visualization, the curves being also able to represent the spasm's effects, particular cardiac situations, tachycardia and lowering of the pressure.

FIG.1

EP 1 746 559 A1

FIG.2

FIG. 3

FIG.4

FIG.5

FIG.6

FIG.7

**European Patent Office**

**EUROPEAN SEARCH REPORT**

Application Number

EP 05 29 1564

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 6 538 634 B1 (CHUI CHEE-KONG ET AL) 25 March 2003 (2003-03-25) * column 7, lines 5-22; figure 10 * ----- | 1-6,8 | G09B23/28 |
| Y | US 2003/056799 A1 (YOUNG STEWART ET AL) 27 March 2003 (2003-03-27) * paragraphs [0002], [0035], [0068]; figure 2c * ----- | 1-6,8 | |
| A | US 2004/249617 A1 (LAU WING HUNG ET AL) 9 December 2004 (2004-12-09) * paragraphs [0003], [0006], [0007], [0021]; figure 1 * ----- | 1 | |
| A | US 6 452 596 B1 (GUEZIEC ANDRE P ET AL) 17 September 2002 (2002-09-17) * claim 1; figures 1,2 * ----- | 1 | |

TECHNICAL FIELDS SEARCHED (Int.Cl.7)

G09B
G06T

The present search report has been drawn up for all claims

| Place of search | Date of completion of the search | Examiner |
|---|---|---|
| Munich | 20 October 2005 | Beauce, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

## ANNEX TO THE EUROPEAN SEARCH REPORT
## ON EUROPEAN PATENT APPLICATION NO.

EP 05 29 1564

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2005

| Patent document cited in search report | | Publication date | Patent family member(s) | | Publication date |
|---|---|---|---|---|---|
| US 6538634 | B1 | 25-03-2003 | NONE | | |
| US 2003056799 | A1 | 27-03-2003 | WO   03021532 A2 | | 13-03-2003 |
| | | | JP   2005502139 T | | 20-01-2005 |
| US 2004249617 | A1 | 09-12-2004 | NONE | | |
| US 6452596 | B1 | 17-09-2002 | NONE | | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4907973 A
- US 5821920 A